# EUROPEAN PATENT APPLICATION

(11) **EP 4 283 008 A1**
(43) Date of publication of application: **29.11.2023**
(21) Application number: 21926247.4
(22) Date of filing: 26.05.2021
(51) Int. Cl.: C22C 38/02, C22C 38/04, C22C 38/12, C22C 38/60, C21D 6/00, C21D 8/00, B21C 37/00

(54) **FREE-CUTTING AND NON-QUENCHED AND TEMPERED STEEL, AND MANUFACTURING METHOD THEREFOR**

(30) Priority: 22.02.2021 CN 202110200164
(71) Applicant: Nanjing Iron & Steel Co., Ltd., Nanjing, Jiangsu 210035 (CN)
(72) Inventor: ZHOU, Lei, Nanjing, Jiangsu 210035 (CN); LIU, Lei, Nanjing, Jiangsu 210035 (CN); FU, Jianxun, Nanjing, Jiangsu 210035 (CN); LIU, Wenxue, Nanjing, Jiangsu 210035 (CN); DENG, Wei, Nanjing, Jiangsu 210035 (CN); TIAN, Qianren, Nanjing, Jiangsu 210035 (CN)
(74) Representative: Murgitroyd & Company
(86) International application number: PCT/CN2021/096014
(87) International publication number: WO 2022/174530

(57) **Abstract**

The present invention discloses a kind of free-cutting non-quenched and tempered steel and a preparation method therefor. The free-cutting non-quenched and tempered steel can alleviate the cracking and mechanical properties degradation of the rolling material caused by sulfide by formulating a reasonable heating system and rolling process without increasing the production cost and energy consumption. The three-stage heating method and the measures such as increasing the IRT and decreasing the FRT not only improve the crack resistance of the rolling material, but also make various microalloying elements be dissolved into the steel matrix as much as possible, thus improving the mechanical properties of the product; and by taking measures such as high-pressure water spraying, ring welding of the head part, air cooling by the cooling bed, and polishing of the rolling material surface, further reduce the probability of cracking during the rolling process, and improve the surface quality of the product, The free-cutting non-quenched and tempered steel produced by using the rolling method provided by the present invention has higher yield and better performance.

## Description

### TECHNICAL FIELD

The present invention relates to a kind of steel and a preparation method therefor, and particularly relates to a kind of free-cutting non-quenched and tempered steel and a preparation method therefor.

### BACKGROUND ART

With the rapid development of the iron and steel industry, the reserves of various non-renewable resources are further declining, and iron and steel enterprises in various countries are sparing no effort to develop low-cost products with low energy consumption to cope with the crisis of resource consumption. Now non-quenched and tempered steel is the most representative type of steel. Without need of quenching and high-temperature tempering with huge energy consumption and pollution, non-quenched and tempered steel has the same excellent properties as quenched and tempered steel. Therefore, vigorous developmental of non-quenched and tempered steel has become the mainstream trend currently.

Free-cutting non-quenched and tempered steel is a mixture of non-quenched and tempered steel and a large amount of sulfur (S: 0.06 to 0.30%). The sulfide formed after mixing the two materials has the functions of cutting off the metallic continuity and lubricating the tool, so that the steel has good cutting performance and is widely applied to the fields of precision machine tool processing and automobile parts manufacturing. However, because these sulfides have good deformability, they will be deformed into long strips along the rolling direction during the rolling process, which not only easily causes internal cracking and surface defects of the rolling material, but also causes deterioration of mechanical properties. Therefore, researchers have been always exploring how to formulate a reasonable heating system and rolling process to improve the product yield and overall quality while ensuring the good cutting performance of the steel.

The invention patent with the publication number of CN 110681698A discloses a 38MnS6L non-quenched and tempered round steel rolling process, which reduces the heating temperature of the heating furnace and increases the tapping speed, and adopts a secondary phosphorus removal method to reduce the iron oxide scale on the surface of the steel as much as possible, thus improving the surface quality of the rolling material. The patent only controls the surface quality of the rolling material, but the problem of internal cracking of the rolling material still exists, and the product yield is still not guaranteed. And because the high-pressure water is used to remove phosphorus again after the hot rolling, the production cost and energy loss are greatly increased.

The invention patent with the publication number of CN108246801A discloses a large-scale non-quenched and tempered steel rolling device and a rolling production method therefor, which stably controls the finishing rolling temperature (FRT) of the non-quenched and tempered steel bar, and achieves the effect of refining the grains and stabilizing the structure by adjusting the cooling rate of the steel bar after rolling, thereby improving the mechanical properties and surface quality of the rolling material. Similarly, the patent only improves the surface quality of the product, and does not control the occurrence of any possible internal cracks. And since the S content of the implementation object in the patent is only 0.02-0.07%, and the sulfur content in the free-cutting non-quenched and tempered steel is generally 0.06-0.30%, the probability of cracking of the rolling material will inevitably increase with the increase of the sulfur content, and the cracking of the rolling material cannot be avoided only by refining the grains, such that the patent is quite limited in composition.

The invention patent with the publication number of CN 105234170 A discloses a large-scale free-cutting steel rolling method, which adjusts the form of sulfide by controlling the temperature in the rolling process, so that the rolling material can have better cutting performance and surface quality. In this patent, in order to realize the regulation of sulfide, the heating temperature and initial rolling temperature (IRT) of a casting blank are set to be too low. The lower heating temperature will lead to the failure of microalloying elements to completely dissolve into a steel matrix, thus resulting in the loss of mechanical properties of the rolled product. A lower IRT will not only affect and reduce the crack resistance of the material, but also lower the lower limit of the FRT, while an excessively low FRT will lead to an increase in the deformation force of the steel, which easily causes difficulty in rolling.

The invention patent with the publication number of CN 109207840 A discloses a kind of free-cutting steel and a manufacturing method therefor. The steel manufacturing method includes the following steps: smelting and refining, casting, rolling, forging, and two-stage cooling (in the first stage, cooling to 650°C-700°C at the cooling rate of 20-30°C/min; in the second stage, air cooling to room temperature). In this patent, the length direction of the sulfide is adjusted to be consistent with the rolling direction of the steel plate by rolling, but in the actual production process, too low rolling temperature will cause this type of steel to be prone to "head splitting" during the rolling process.

### SUMMARY

An objective of the present invention: in order to overcome the defects of the prior art, the present invention provides a free-cutting non-quenched and tempered steel with the high yield and overall quality.

Another objective of the present invention is to provide a method for preparing the above free-cutting non-quenched and tempered steel. The method is capable to improve the crack resistance and mechanical properties of the rolling material without increasing the production cost, thereby alleviating the sulfide-induced cracking of the rolling material and the deterioration of mechanical properties.

Technical solution: the free-cutting non-quenched and tempered steel according to the present invention includes the following components in percentage by mass: C: 0.15-0.34%, Si: 0.10-0.81%, Mn: 0.45-1.60%, P: 0.02-0.09%, S: 0.08-0.38%, V: 0.05-0.20%, Nb: 0.05-0.15%, and the balance of iron and inevitable impurities.

Specifically, the structure of the free-cutting non-quenched and tempered steel is ferrite + pearlite, where the proportion of ferrite is 20%-52%, and the balance is from pearlite.

The finished size of the steel is ϕ20-150 mm.

Corresponding to the above free-cutting non-quenched and tempered steel, the technical solution adopted for the preparation method provided by the present invention includes the following steps:
(1) three-stage heating: in a heating furnace, heating a casting blank to 800-900°C at a heating rate of 15-20°C/min (faster heating in the early stage makes it possible to release the deformation force inside the casting blank more quickly, and is beneficial to overcoming the internal defects of the casting blank); then heating to 900-1000 °C at a heating rate of 6-10°C/min to ensure that microalloying elements are dissolved into a steel matrix as much as possible, thereby improving the mechanical properties of the product; finally, heating the casting blank to 1150-1200 °C at a heating rate of 4-8°C/min, and keeping the temperature for 70-90 min; heating the inside of the casting blank evenly, to greatly improve its crack resistance;
(2) removing iron oxide scale by use of high-pressure water: a layer of iron oxide scale is formed on the surface of the heated casting blank, and such iron oxide scale will be extruded with the steel matrix in the subsequent rolling process, which reduces the surface quality of the rolling material, so before rough rolling, the iron oxide scale on the surface needs to be removed by use of high-pressure water; too high water pressure will result in an excessive temperature drop on the surface of the rolling material, and too low water pressure will lead to failure to remove the iron oxide scale, so the water pressure needs to be controlled at 18-22 Mpa;
(3) rough rolling of the casting blank: the initial rolling temperature (IRT) is controlled at 1130-1180°C, and the rolling material has higher crack resistance at a higher IRT, is less affected by sulfide during the rolling process, and is also less prone to cracking; after rough rolling, spraying cooling water to cool the rolling material, and controlling the surface temperature of the rolling material at 1000-1040°C;
(4) Split-head treatment of the rolling material: after cooling by use of cooling water, removing the original split head and then performing ring welding on the head part due to the large temperature drop of the split head of the rolling material, to solve the problem of split head cracking caused by uneven heating of the rolling material in the process of hot continuous rolling;
(5) hot continuous rolling and finish rolling: sending the rolling material to the hot continuous rolling and finish rolling unit for rolling; control of the finishing rolling temperature (FRT) is extremely important throughout the rolling process, and the rolling material at a lower FRT has higher tensile strength and significantly improved crack resistance; however, too low FRT will cause the deformation force of the rolling material to decrease and form hot forging cracks, so the FRT should be controlled at 950-990°C; and
(6) controlled cooling of the rolling material: after finish rolling, removing the welding ring part, cooling the rolling material by spraying water, and cooling the rolling material to 580-620°C, which is conducive to forming a ferrite + pearlite structure with high toughness and improving the overall mechanical properties of the steel; then transporting to a cooling bed for air cooling, to release the hydrogen in the rolling material, so as to reduce the phenomenon of hydrogen embrittlement and the probability of cracking during the use of the product.

The step of finishing the rolling material is further included: after the air cooling, straightening the rolling material, and polishing its surface to eliminate local defects and further improve the surface quality of the rolling material.

Beneficial effects: compared with the prior art, the free-cutting non-quenched and tempered steel can alleviate the cracking and mechanical properties degradation of the rolling material caused by sulfide by formulating a reasonable heating system and rolling process without increasing the production cost and energy consumption. The three-stage heating method and the measures such as increasing the IRT and decreasing the FRT not only improve the crack resistance of the rolling material, but also make various microalloying elements be dissolved into the steel matrix as much as possible, thus improving the mechanical properties of the product; and by taking measures such as high-pressure water spraying, ring welding of the head part, air cooling by the cooling bed, and polishing of the rolling material surface, further reduce the probability of cracking during the rolling process, and improve the surface quality of the product, greatly improving the product yield and overall quality of free-cutting non-quenched and tempered steel.

### DETAILED DESCRIPTION OF THE EMBODIMENTS

Example 1: The section of a casting blank of a kind of free-cutting non-quenched and tempered steel is 200 mm×200 mm, and includes the following components in percentage by mass: C: 0.28%, Si: 0.52%, Mn: 1.21%, P: 0.05%, S: 0.21%, V: 0.10%, Nb: 0.08%, and the balance of Fe and impurities. The composition meets the requirements of the free-cutting non-quenched and tempered steel grade, and the heating and rolling methods in this embodiment are as follows:
(1) the three-stage heating method is adopted: in the first stage, the casting blank was firstly heated to 880°C at a heating rate of 18°C/min; in the second stage, the casting blank was gently heated to 960°C at a heating rate of 7°C/min; in the third stage, the casting blank was slowly heated to 1170°C at a heating rate of 6°C/min, with the temperature kept for 75 min;
(2) the iron oxide scale existing on the surface of the casting blank after heating was treated with high-pressure water, and the water pressure was controlled at 21 MPa;
(3) the casting blank was rough-rolled by use of a two-roll reverse mill, the initial rolling temperature (IRT) was controlled at 1160°C, after the rough rolling, cooling water was sprayed to cool the rolling material, and the surface temperature of the rolling material was controlled at 1030°C;
(4) after cooling by cooling water, the temperature of the split head part of the rolling material was only 960°C due to thermal conductivity, so a hydraulic shear was used to remove the split head and then the head part was treated with a welding ring;
(5) after welding ring treatment, the rolling material was sent to the hot continuous rolling and finish rolling unit for rolling, the FRT was controlled at 970°C, and after finish rolling, the hydraulic shear was used to remove the welding ring part;
(6) after finish rolling, the rolling material was cooled by means of water spraying, and after the temperature of the rolling material was lowered to 600°C, the rolling material was transported to a cooling bed for air cooling; and
(7) after the air cooling, the rolling material was straightened, and its surface was polished to eliminate local defects.

The free-cutting non-quenched and tempered steel obtained by rolling based on the above process has a diameter of 30 mm, a Brinell hardness of 158, a tensile strength of 720 MPa, a microstructure of 36% ferrite + 64% pearlite, and good overall mechanical properties.

The preparation process of other examples is the same as that in Example 1, but the parameters are slightly different. The composition of the product in each example is shown in Table 1, and the balance is from Fe and impurities

**Table 1 Composition of the product in Examples 2-6 (wt.%)**

| Example No. | C | Si | Mn | P | S | V | Nb |
|---|---|---|---|---|---|---|---|
| 2 | 0.21 | 0.10 | 0.89 | 0.02 | 0.12 | 0.20 | 0.15 |
| 3 | 0.15 | 0.36 | 0.92 | 0.04 | 0.08 | 0.15 | 0.10 |
| 4 | 0.32 | 0.24 | 1.60 | 0.06 | 0.38 | 0.05 | 0.13 |
| 5 | 0.34 | 0.59 | 1.36 | 0.09 | 0.36 | 0.09 | 0.05 |
| 6 | 0.18 | 0.81 | 0.45 | 0.03 | 0.24 | 0.12 | 0.08 |

The preparation parameters of Examples 2-6 are shown in Table 2:

**Table 2 Process parameters of each example**

| Example No. | Finished product diameter mm | Section of casting blank mm | Three-stage heating parameters | | | | | | | |
|---|---|---|---|---|---|---|---|---|---|---|
| | | | Stage 1 heating rate °C/min | Stage 1 temperature °C | Stage 2 heating rate °C/min | Stage 2 temperature °C | Stage 3 heating rate °C/min | Stage 3 temperature °C | Heat preservation time min | |
| 2 | 120 | 300×300 | 15 | 800 | 9 | 920 | 6 | 1160 | 70 | |
| 3 | 80 | 240×240 | 18 | 850 | 6 | 900 | 5 | 1180 | 82 | |
| 4 | 150 | 320×320 | 17 | 900 | 7 | 1000 | 8 | 1200 | 90 | |
| 5 | 20 | 150×150 | 20 | 870 | 10 | 980 | 7 | 1150 | 85 | |
| 6 | 65 | 200×200 | 19 | 830 | 8 | 960 | 4 | 1170 | 78 | |

| Example No. | Water pressure MPa | IRT °C | Surface temperature °C | | FRT °C | | Cooling temperature °C | | | |
|---|---|---|---|---|---|---|---|---|---|---|
| 2 | 18 | 1150 | 1010 | | 950 | | 600 | | | |
| 3 | 21 | 1170 | 1030 | | 960 | | 590 | | | |
| 4 | 22 | 1180 | 1040 | | 990 | | 580 | | | |
| 5 | 19 | 1130 | 1000 | | 950 | | 610 | | | |
| 6 | 20 | 1160 | 1020 | | 970 | | 620 | | | |

The technical parameters of the free-cutting non-quenched and tempered steel obtained by rolling in Example 2-6 are shown in Table 3:

**Table 3 Technical parameters of steel in each example**

| Example No. | Brinell hardness HB | Tensile strength MPa | Ferrite content % | Pearlite content % |
|---|---|---|---|---|
| 2 | 145 | 661 | 44 | 56 |
| 3 | 144 | 656 | 52 | 48 |
| 4 | 166 | 756 | 30 | 70 |
| 5 | 171 | 779 | 25 | 75 |
| 6 | 147 | 670 | 49 | 51 |

Due to the composition design and preparation method of the present invention, the cracking phenomenon of the obtained free-cutting non-quenched and tempered steel rolling material basically disappears, and the yield is increased from the original 60% to 90%.

## Claims

1. A kind of free-cutting non-quenched and tempered steel, comprising the following components in percentage by mass: C: 0.15-0.34%, Si: 0.10-0.81%, Mn: 0.45-1.60%, P: 0.02-0.09%, S: 0.08-0.38%, V: 0.05-0.20%, Nb: 0.05-0.15%, and the balance of iron and inevitable impurities.

2. The free-cutting non-quenched and tempered steel according to claim 1, wherein the structure of the free-cutting non-quenched and tempered steel is ferrite + pearlite, the proportion of ferrite is 20%-52%, and the balance is from pearlite.

3. The free-cutting non-quenched and tempered steel according to claim 1, wherein the finished size of the steel is ϕ20-150 mm.

4. A preparation method for the free-cutting non-quenched and tempered steel according to any one of claims 1-3, comprising the following steps:
(1) three-stage heating: heating a casting blank to 800-900°C at a heating rate of 15-20°C/min first, then heating to 900-1000 °C at a heating rate of 6-10°C/min, finally heating the casting blank to 1150-1200 °C at a heating rate of 4-8°C/min, and keeping the temperature for 70-90 min;
(2) removing iron oxide scale by use of high-pressure water: controlling water pressure at 18-22 Mpa;
(3) rough-rolling the casting blank: controlling the IRT at 1130-1180°C, after the rough rolling, spraying cooling water to cool the rolling material, and controlling the surface temperature of the rolling material at 1000-1040°C;
(4) split-head treatment of the rolling material: removing the original split head and then performing ring welding on the head part;
(5) hot continuous rolling and finish rolling: sending the rolling material to the hot continuous rolling and finish rolling unit for rolling, and controlling the finishing rolling temperature (FRT) at 950-990°C; and
(6) controlled cooling of the rolling material: after finish rolling, removing the welding ring part, cooling the rolling material by spraying water, cooling the rolling material to 580-620°C, and then transporting to a cooling bed for air cooling.

5. The preparation method according to claim 4, wherein the step of finishing the rolling material is further comprised: after the air cooling, straightening the rolling material, and polishing its surface to eliminate local defects.

6. The preparation method according to claim 3, wherein in the step (3), the casting blank is rough-rolled by use of a two-roll reverse mill.

7. The preparation method according to claim 3, wherein in the step (4), a hydraulic shear is used to remove the split head part of the rolling material.

8. The preparation method according to claim 3, wherein in the step (6), after finish rolling, the hydraulic shear is used to remove the welding ring part.
